# EUROPÄISCHE PATENTSCHRIFT

(11) **EP 1 413 531 B1**
(45) Veröffentlichungstag und Bekanntmachung des Hinweises auf die Patenterteilung: **20.07.2005**
(21) Anmeldenummer: 03450025.6
(22) Anmeldetag: 23.01.2003
(51) Int. Cl.: C03B 33/03, B65G 49/06

(54) **Glasschneideanlage mit Zwischenspeicher**
Glass cutting apparatus with an intermediate storage device
Appareil de coupe de feuilles de verre avec un dispositif de stockage intermédiaire

(30) Priorität: 24.10.2002 DE 20216438 U
(43) Veröffentlichungstag der Anmeldung: 28.04.2004
(73) Patentinhaber: Lisec Maschinenbau GmbH, 3353 Seitenstetten (AT)
(72) Erfinder: Lisec Maschinenbau GmbH, 3353 Seitenstetten (AT)
(74) Vertreter: Beer, Manfred, Dipl.-Ing.

(56) Entgegenhaltungen:
- EP-A- 1 101 742
- EP-A- 1 284 229
- US-A- 3 279 664
- PATENT ABSTRACTS OF JAPAN vol. 2002, no. 05, 3. Mai 2002 (2002-05-03) & JP 2002 019959 A (ISHIKAWAJIMA HARIMA HEAVY IND CO LTD), 23. Januar 2002 (2002-01-23)

## Beschreibung

Die Erfindung betrifft eine Glasschneideanlage (Schneid- und Brechtisch) mit einem Zwischenspeicher für Glastafeln und Zuschnitte sowie Reste von Glastafeln, die kürzere oder längere Zeit nicht benötigt werden.

Übliche Glasschneidetische bestehen aus wenigstens einem Schneidtisch mit einer entlang dem Schneidtisch verfahrbaren Brücke, entlang welcher ein Schneidkopf verfahrbar ist. Die auf dem Schneidtisch geritzten Glastafeln, in der Regel Rohmaße (Abmessungen: beispielsweise 6,0 m x 3,2 m) werden dann auf den Brechtisch bewegt und dort zerteilt.

Häufig kommt es vor, daß beim Zerteilen ein größerer Glastafelzuschnitt ("Restmaß" der "Restplatte") anfällt, der vorerst nicht weiter zu zerteilen ist.

Es ist bekannt, solche nicht unmittelbar benötigten Zuschnitte oberhalb des Brechtisches zu speichern, wozu oberhalb der Schneidanlage aufwändige Hebeeinrichtungen und ein Speicher, der mit Fördereinrichtungen versehene Fächer aufweist, vorgesehen sind. Nachteilig bei diesen bekannten Speichern ist es, daß diese sehr aufwändig konstruiert sind und das Heben von Glastafelzuschnitten nur mit großem Sicherheitsaufwand möglich ist. Hinzu kommt, daß die in Frage kommenden Glastafelzuschnitte immer wieder andere Abmessungen haben, so daß die Hebeeinrichtungen an diese unterschiedlichen Abmessungen angepaßt werden müssen. Nachteilig bei den bekannten Speichern ist auch, daß diese während des Abhebens von zu speichernden Glaszuschnitten das Teilen von Glastafeln längere Zeit behindern.

Der Erfindung liegt die Aufgabe zugrunde, eine Glasschneideanlage mit Zwischenspeicher der eingangs genannten Gattung zur Verfügung zu stellen, welche die bekannten Nachteile nicht aufweist.

Gelöst wird diese Aufgabe mit einer Anlage, welche die Merkmale von Anspruch 1 aufweist.

Bevorzugte und vorteilhafte weitere Ausgestaltungen der erfindungsgemäßen Anlage sind Gegenstand der Unteransprüche.

Dadurch, daß der neben dem Brechtisch angeordnete Zwischenspeicher wenigstens zwei Fächer für zu speichernde Glastafeln aufweist und in Höhenrichtung verstellbar ist, so daß das ausgewählte Fach in der Höhe des Brechtisches ausgerichtet werden kann, ist es ohne Aufwand, nämlich ohne Heben des Glaszuschnittes, möglich, Glaszuschnitte im Speicher abzulegen. Wenn der Brechtisch in Richtung auf den Zwischenspeicher abfallend ausgerichtet werden kann, gleiten Glastafeln auf dem Brechtisch in den Zwischenspeicher und können dort gelagert werden, bis sie wieder benötigt werden.

Bevorzugt ist es dabei, wenn die Oberfläche des Brechtisches als Luftkissentisch ausgebildet ist, so daß die Glastafeln mit geringer Reibung gleiten.

In einer Ausführungsform der Erfindung kann vorgesehen sein, daß auch der Zwischenspeicher bzw. die in ihm vorgesehenen Fächer in die gleiche Richtung schräggestellt werden können wie der Brechtisch, so daß die Glastafeln sicher bis in ihre Speicherstellung im ausgewählten Fach des Zwischenspeichers gleiten können.

Zum Herausnehmen von zwischengespeicherten Glastafeln aus dem Speicher wird dieser bzw. wenigstens das Fach, aus dem eine Glastafel zu entnehmen ist, so schräggestellt, daß sein dem Brechtisch benachbarter Rand abgesenkt ist, und Glastafeln aus dem Speicher ohne weiteres auf dem Brechtisch gleiten.

Bei dieser Variante kann vorgesehen sein, daß der Brechtisch ebenfalls so geneigt wird, daß er von seiner dem Speicher benachbarten Kante hin zur gegenüberliegenden Kante abfällt, so daß die Glastafeln sicher bis auf den Brechtisch gleiten.

Um zu verhindern, daß Glastafeln zu weit rutschen, bzw. an Endanschlägen zu kräftig anschlagen, kann beim Entnehmen von Glastafeln, z.B. Restmaßen, aus dem Zwischenspeicher nach einer bestimmten Zeit, d.h. nach einer bestimmten Bewegung die Glastafel auf dem Brechtisch, der Druck der Luft, die das Luftkissen am Brechtisch bildet, verringert, bzw. auf Null abgestellt werden, so daß die Glastafel durch Reiben an der Oberfläche des Brechtisches gebremst wird.

In einer Ausführungsform kann vorgesehen sein, daß die Fächer ebenfalls mit Luftkissenböden ausgebildet sind.

Dabei ist es möglich, daß die Böden der Fächer im Zwischenspeicher oder wenigstens einer derselben in wenigstens zwei unabhängig voneinander mit Druckluft beaufschlagbare Teile unterteilt sind, so daß in dem Fach wenigstens zwei Glasschnitte nebeneinander angeordnet werden können. Um zu verhindern, daß beim Entnehmen eines Glasschnittes der andere ebenfalls aus dem Fach gleitet, wird einfach die Luftzufuhr zu diesem Abschnitt des Fachbodens unterbrochen, oder statt Druckluft in diesem Bereich Saugluft angewendet.

Vorteilhaft ist es, wenn bei der erfindungsgemäßen Ausführung der gesamte Brechtisch gekippt wird und nicht nur dessen obere Platte, was aus Stabilitätsgründen vorzuziehen ist.

Die Fachböden, welche die Fächer des Speichers nach unten begrenzen, können in einem Rahmen montiert sein, der gemeinsam die jeweils gewünschte Lage kippbar und an einem oder mehreren Stehern auf- und abverschiebbar geführt ist.

Weitere Einzelheiten, Vorteile und Merkmale der Erfindung ergeben sich aus der nachstehenden Beschreibung bevorzugter Ausführungsbeispiele unter Bezugnahme auf die Zeichnungen.

Es zeigt:
Fig. 1 in Draufsicht die schematische Anordnung eines Glasschneidetisches mit zugeordnetem Zwischenspeicher gemäß der Erfindung;
Fig. 2 eine Seitenansicht der Anordnung vom Ende des Brechtisches aus gesehen; und
Fig. 3 in Schrägansicht beispielhaft zwei Böden von Fächern des Zwischenspeichers und
Fig. 4 in Schrägansicht eine weitere Ausführungsform eines Rahmens für den Boden von Fächern des Zwischenspeichers.

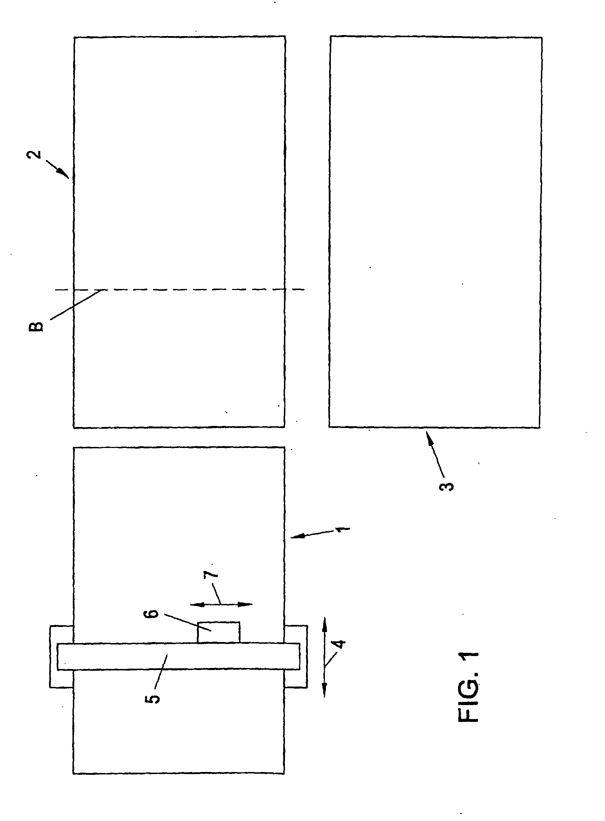

Eine in Fig. 1 gezeigte Glasschneideanlage besteht aus einem Glasschneidetisch 1 und einem Brechtisch 2 und einem neben dem Brechtisch angeordneten (Zwischen-)Speicher 3.

An dem Brechtisch 1 ist dessen Längsrichtung (Pfeil 4) verstellbar eine Schneidbrücke 5 angeordnet. An der Schneidbrücke 5 ist in ihrer Längserstreckung verschiebbar (Pfeil 7) ein Schneidkopf 6 vorgesehen.

Mit dem Schneidkopf 6 werden Glastafeln geritzt und dann durch nicht gezeigte Fördermittel (Förderbänder u.dgl.) auf den Brechtisch 2 bewegt, wo sie nach wenigstens einer Richtung (symbolisiert durch die strichlierte Linie B in Fig. 1) zerteilt werden. Das Zerteilen (Brechen) kann durch Anheben einer Brechleiste, durch Anheben einer Brechrolle oder -walze oder durch Anheben der geritzten Glastafeln lediglich an einem Ende und Niederdrücken beidseitig der Brechlinie, eingeleitet und ausgeführt werden.

Wenn auf dem Brechtisch 2 ein Glastafelzuschnitt ("Restmaß") anfällt, der wenigstens vorerst nicht weiter zu verarbeiten ist, wird dieser in den neben dem Brechtisch 2 angeordneten Speicher 3 bewegt.

Ein weiterer (Zwischen-)Speicher (nicht gezeigt) kann auch neben dem Schneidtisch 1 angeordnet sein. Meist genügt aber ein Speicher 3, der wie in dem in Fig. 1 gezeigten Ausführungsbeispiel neben dem Brechtisch 2 angeordnet ist.

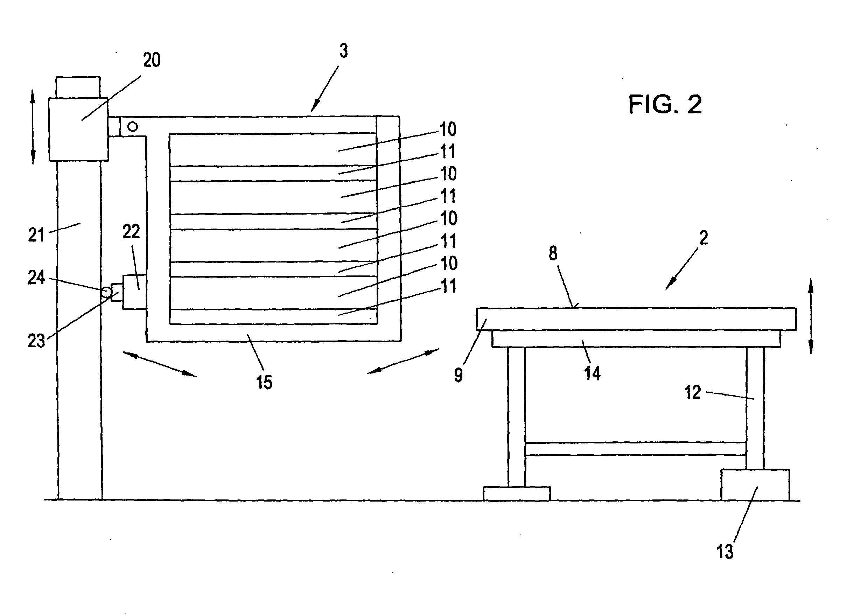

Die Anordnung und Ausbildung des Zwischenspeichers 3 ist in Fig. 2 beispielhaft dargestellt.

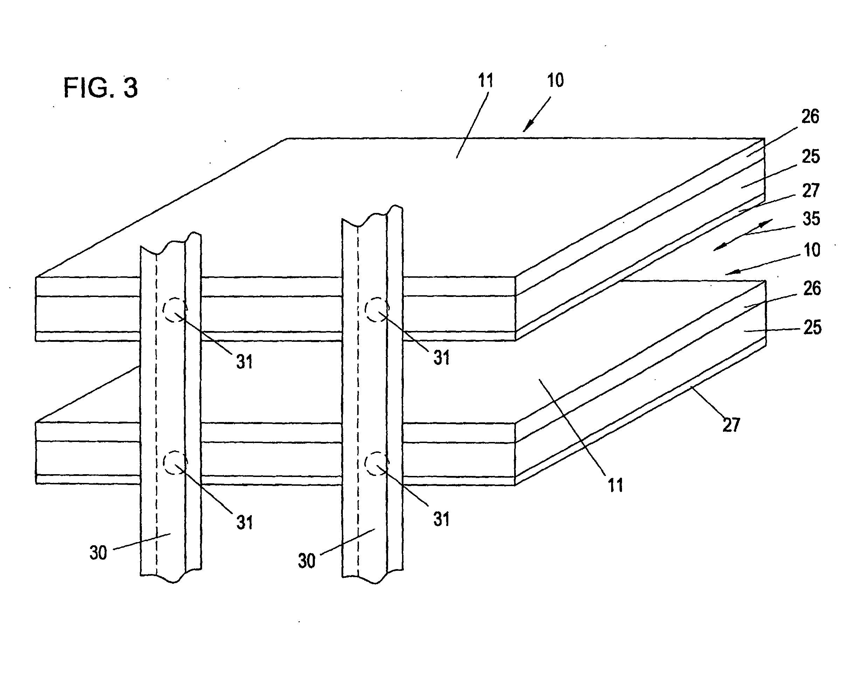

Der Zwischenspeicher 3 besitzt im gezeigten Ausführungsbeispiel vier Fächer 10, die unten von Fachböden 11, die jeweils als Luftkissen ausgebildet sind, wie dies nachstehend noch an Hand der Fig. 3 erläutert werden wird, begrenzt werden. Die die Fächer 10 begrenzenden Böden 11 sind in einem Rahmen 15 gehalten, der seinerseits verschwenkbar an wenigstens einer Führung (Schlitten 20), die an wenigstens einer Säule 21 auf- und abverschiebbar angeordnet ist, gehalten wird. Zum Verstellen der Führung 20 (Schlitten) entlang der Säule 21 können beliebige Mittel vorgesehen sein, wie Druckmittelzylinder, Kettenantriebe, Seilzüge, Spindelantriebe oder ähnliches.

Um den Zwischenspeicher 3, also seine Fachböden 11 durch Kippen schräg stellen zu können, ist wenigstens eine Spreizeinrichtung, z.B. ein Druckmittelmotor 22 vorgesehen, der sich im gezeigten Ausführungsbeispiel mit seinem Kolben 23 über eine Rolle 24 an der Säule 21 abstützt. Dabei ist die Anordnung so getroffen, daß bei ausgefahrenem Kolben 23 des Druckmittelmotors 22 der Rahmen 15 und damit die Fachböden 11 so schräggestellt sind, daß sie vom Brechtisch 2 weg hin abfallen und bei eingefahrenem Kolben 23 des Betätigungszylinders 22 zum Brechtisch 2 hin abfallend ausgerichtet sind. Ein Schrägstellen um 1 bis 2° genügt in der Regel, insbesondere wenn die Fachböden 11 als Luftkissen ausgebildet sind.

Statt des Druckmittelmotors 22 zum Schrägstellen des Rahmens 15 und damit der Fachböden 11 können beliebige andere Mittel vorgesehen sein. Denkbar sind Nocken oder andere Spreizvorrichtungen, wie Hebel oder Kniegelenke.

Der Brechtisch 2 selbst ist - vorzugsweise zusammen mit seinem Gestell - ebenfalls kippbar, so daß er zusätzlich zur horizontalen Ausrichtung in eine Stellung gebracht werden kann, in der seine obere Fläche 8 zum Speicher 3 hin abfällt einerseits und in eine Stellung, in der die Fläche 8 vom Speicher 3 weg abfallend ausgerichtet ist, anderseits. Dies kann einfach dadurch erreicht werden, daß die vom Speicher 3 entfernt angeordneten Füße 12 des Brechtisches 2 mit je einer Hebeeinrichtung 13 (z.B. einem Druckmittelzylinder) verbunden sind, wie es schematisch in Fig. 2 angedeutet ist. Durch Betätigen der Hebeeinrichtungen 13 kann der Tisch 2 aus seiner horizontalen Gebrauchslage in eine Lage bewegt werden (Anheben der Füße), die zum Speicher 3 hin abfällt, und in eine Lage gebracht wird, in der seine obere Fläche 8 vom Speicher 3 weg abfallend ausgerichtet ist.

Wenngleich es möglich ist, ausschließlich die Platte 9 des Tisches 2 zu kippen, ist es aus Festigkeitsgründen vorzuziehen, den gesamten Tisch 2 einschließlich seines Rahmens zu bewegen, um die erläuterten Schrägstellungen zu erreichen.

Im gezeigten Ausführungsbeispiel ist der Brechtisch 2 als Luftkissentisch ausgebildet, weshalb unter seiner Platte 9 eine Kammer 14, die mit Druckluft beaufschlagt werden kann, vorgesehen ist.

Wie in Fig. 3 gezeigt, können die Fächer 10 des Speichers 3 begrenzenden Fachböden 11 so ausgebildet sein, daß sie einen Außenrahmen 25 besitzen, der oben mit einer luftdurchlässigen, oder mit Löchern versehenen Platte 26 abgeschlossen ist und unten luftdicht durch eine (Blech-)Platte 27 verschlossen ist. Dem Innenraum des Rahmens 25 wird über, im gezeigten Ausführungsbeispiel zwei, Kanäle 30 Druckluft zugeführt, wobei an jeder Anschlußstelle 31 jedes Kanals 30 zu einem Fachboden 11 ein Absperrorgan (nicht gezeigt) vorgesehen ist, so daß jeder Fachboden 11 bei Bedarf mit Druckluft beaufschlagt werden kann.

Dies hat den Vorteil, daß Glasplatten aus nicht mit Druckluft beaufschlagten Fächern 10 wegen der erhöhten Reibung am Fachboden 11 selbst dann im Fach 10 liegen bleiben, wenn der Fachboden 11 geneigt ist.

In einer Ausführungsform kann vorgesehen sein, daß jeder Fachboden 11 wenigstens einmal unterteilt ist, und daß seine zwei Hälften unabhängig voneinander mit Druckluft beaufschlagt werden können. Dies erlaubt es in jedem Fach 10 wenigstens zwei Glaszuschnitte zwischenzuspeichern.

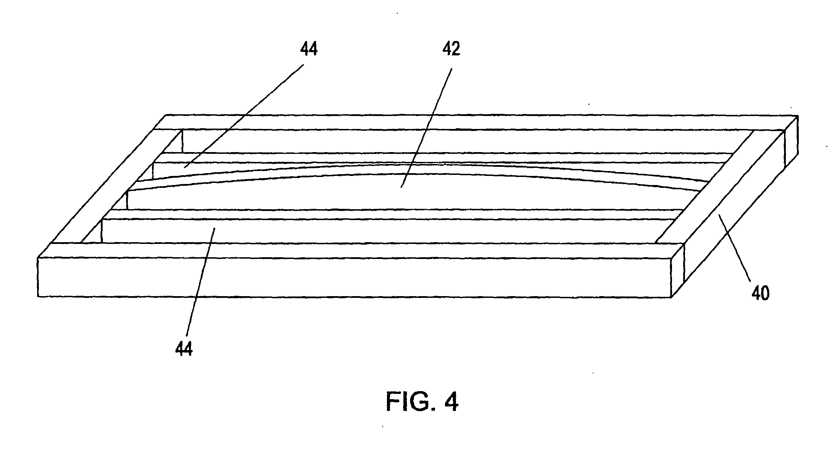

Bei der in Fig. 4 gezeigten Ausführungsform besitzt der Fachboden 11 einen Rahmen aus Profilstäben, z.B. Profilstahlrohren, und wenigstens zwei innerhalb des Rahmens 42, vorzugsweise in dessen Längsrichtung, ausgerichtete Streben 42 und 44, wobei die eine Strebe 42 im nicht belasteten Zustand des Fachbodens 11 von oben gesehen konvex gekrümmt ist. Die andere Strebe 44 innerhalb des Rahmens 40 des Fachbodens 11 ist gerade ausgerichtet.

Der Fachboden 11 ist oben durch eine Lochplatte 26 und unten durch eine geschlossene Platte 27 verschlossen, um einen Raum zu schaffen, der mit Druckluft für das Ausbilden eines Luftkissens an der Oberseite des Fachbodens 11 beaufschlagt werden kann. Bei Belastung des Fachbodens 11 wird durch das Gewicht der Glasplatte, die auf dem Fachboden 11 liegt, die nach oben gebogene Strebe 42 unter Stauchung gestreckt und der Fachboden 11 nimmt eine im wesentlichen ebene Gestalt ein. Dadurch wird ein auch bei einer nur geringen Bauhöhe sehr stabiler und belastbarer Fachboden 11 geschaffen.

In einer im Einzelnen nicht gezeigten Ausführungsform kann der Zwischenspeicher 3 durch in seinem Außenrahmen integrierte Hubspindeln oder andere Klebemittel, wie Druckmittelzylinder, angehoben und abgesenkt sowie für das Beschicken oder Entlehren und die Benützung des Zwischenspeichers gekippt werden. Beispielsweise sind die Hubspindeln an den Schmalseiten des Zwischenspeichers 3 mit Abstand von seinen Ecken angeordnet.

Beim Benützen der Anlage kann wie folgt gearbeitet werden:

Nach dem Ritzen einer Glastafel, z.B. eines Rohmaßes, auf dem Schneidtisch 1 wird diese auf den Brechtisch 2 bewegt und entlang der Brechlinie B durch die Brechvorrichtung wenigstens einmal geteilt. Ein dabei allenfalls anfallendes, nicht sofort benötigtes Stück der Glastafel (Restmaß) wird vom Brechtisch 2 in den Zwischenspeicher 3 bewegt. Hiezu wird ein freies Fach 10 des Zwischenspeichers 3 durch Heben/Senken des Zwischenspeichers 3 in der gleichen Höhe wie die Platte 9 des Brechtisches 2 ausgerichtet und so schräggestellt, daß es vom Brechtisch 2 weg abfällt. Der Brechtisch 2 selbst wird durch Betätigen der Hubvorrichtungen 13 an seinen vom Zwischenspeicher 3 entfernt liegenden Beinen 12 des Rahmens des Tisches 2 so schräggestellt, daß seine Oberseite 8 zum Zwischenspeicher 3 hin abfällt. Durch Beaufschlagen des Luftkissens des Brechtisches 2 gleitet nun die Glastafel vom Brechtisch in das ausgewählte Fach 10 (Pfeil 35) und der Brechtisch 2 steht für weitere Brecharbeiten wieder zur Verfügung, nachdem er in seine horizontale Lage zurückbewegt worden ist. Das Schrägstellen des Faches 10 wird durch Betätigen des Druckmittelmotors 22 der Hebevorrichtungen erreicht.

Wenn nun ein zwischengespeicherter Glastafelzuschnitt weiter bearbeitet werden soll, wird der Zwischenspeicher 3 so ausgerichtet, daß das betroffene Fach 10 höhenmäßig neben dem Brechtisch 2 - dessen Platte 9 - ausgerichtet ist und z. B. durch Einfahren des Kolbens 23 des Zylinders 22, in seine zum Brechtisch 2 hin abfallende Schräglage gekippt und der Brechtisch 2 ebenfalls so schräggestellt, daß er vom Zwischenspeicher 2 weg abfällt, in Fig. 3 also von rechts nach links. Nun wird das Luftkissen des Fachbodens 11 in Betrieb genommen und die Glastafel gleitet (Pfeil 35) aus dem Fach 10 auf den Brechtisch 2. Wenn das Restmaß, also die aus dem Speicher 2 entnommene Glastafel noch nicht geritzt wird, wird sie zum Schneidetisch 1 bewegt und dort entsprechend dem Aufteilungsschema geritzt und dann durch Brechen geteilt.

Für den Zwischenspeicher 3 und seine Fächer 1 genügt in der Regel, wenn dieser eine Schrägstellung vom Brechtisch weg abfallend und eine Schrägstellung zum Brechtisch hin abfallend einnehmen kann.

Zusammenfassend kann ein Ausführungsbeispiel der Erfindung wie folgt dargestellt werden:

Bei einer Glasschneideanlage bestehend aus wenigstens einem Schneidetisch 1 und wenigstens einem Brechtisch 2 ist ein Zwischenspeicher 3 für Glastafeln vorgesehen. In diesem Zwischenspeicher 3 werden Glastafeln bzw. Glastafelzuschnitte, die wenigstens eine Zeitlang nicht zu bearbeiten sind, für die spätere Weiterverarbeitung (weiteres Zerteilen) gelagert. Der Zwischenspeicher 3 ist neben dem Brechtisch 2 angeordnet und weist wenigstens zwei im wesentlichen horizontale Fächer auf. Um die Fächer neben dem Brechtisch ausrichten zu können, sind die Fächer, bevorzugt der gesamte Zwischenspeicher 3, heb- und senkbar. Um das Transportieren von Glastafeln oder Glastafelzuschnitten in bzw. aus dem Zwischenspeicher 3 zu vereinfachen, sind dessen Fächer mit Luftkissenböden ausgebildet und kippbar, so dass Glasscheiben in den Zwischenspeicher 3 gleiten oder aus diesem herausrutschen. Auch der Brechtisch 2 ist ebenfalls kippbar, um Glastafeln von ihm in den Zwischenspeicher 3 gleiten zu lassen bzw. aus dem Zwischenspeicher 3 auf den Brechtisch 2 rutschen zu lassen.

## Patentansprüche

1. Glasschneideanlage, bestehend aus Schneidetisch (1) und Brechtisch (2) mit einem Zwischenspeicher (3) für Glastafeln, **dadurch gekennzeichnet, daß** der Zwischenspeicher (3) neben dem Brechtisch (2) angeordnet ist.

2. Anlage nach Anspruch 1, **dadurch gekennzeichnet, daß** der Zwischenspeicher (3) wenigstens zwei im wesentlichen horizontale Fächer (10) aufweist.

3. Anlage nach Anspruch 1 oder 2, **dadurch gekennzeichnet, daß** der Zwischenspeicher (3) heb- und senkbar ist.

4. Anlage nach Anspruch 3, **dadurch gekennzeichnet, daß** der Zwischenspeicher (3) an wenigstens einer Säule (21) auf- und abverschiebbar geführt ist.

5. Anlage nach einem der Ansprüche 1 bis 4, **dadurch gekennzeichnet, daß** der Zwischenspeicher (3) aus einer Lage, in der die Fächer (10) zum Brechtisch (2) hin abfallend ausgerichtet sind, in eine Lage kippbar ist, in der die Fächer (10) vom Brechtisch (2) weg abfallend ausgerichtet sind, und umgekehrt.

6. Anlage nach einem der Ansprüche 1 bis 5, **dadurch gekennzeichnet, daß** der Zwischenspeicher (3) einen Rahmen (15) besitzt, der an einer als Schlitten (20) ausgebildeten Führung verschwenkbar gehalten ist.

7. Anlage nach Anspruch 6, **dadurch gekennzeichnet, daß** der eine Schlitten (20) an der lotrechten Säule (21) geführt ist.

8. Anlage nach Anspruch 6 oder 7, **dadurch gekennzeichnet, daß** zum Kippen des Speichers (2) an dessen Rahmen (15) eine Spreizeinrichtung (22) angreift.

9. Anlage nach Anspruch 8, **dadurch gekennzeichnet, daß** sich die Spreizeinrichtung (22) an der Säule (21) abstützt.

10. Anlage nach Anspruch 8 oder 9, **dadurch gekennzeichnet, daß** die Spreizeinrichtung eine Hebeleinrichtung ist.

11. Anlage nach Anspruch 8 oder 9, **dadurch gekennzeichnet, daß** die Spreizeinrichtung ein Druckmittelzylinder (22) ist.

12. Anlage nach Anspruch 8 oder 9, **dadurch gekennzeichnet, daß** die Spreizeinrichtung eine verstellbare Nocke ist.

13. Anlage nach einem der Ansprüche 1 bis 12, **dadurch gekennzeichnet, daß** der Brechtisch (2) aus einer horizontalen Lage seiner Platte (9) in eine Lage, in der seine Platte (9) zum Speicher (3) hin abfallend ausgerichtet ist, und in eine Lage, in der seine Platte (9) vom Speicher (3) weg abfallend ausgerichtet ist, kippbar ist und umgekehrt.

14. Anlage nach Anspruch 13, **dadurch gekennzeichnet, daß** der Tisch (2) einschließlich seines Rahmens und seiner Platte (9) kippbar ist.

15. Anlage nach einem der Ansprüche 1 bis 14, **dadurch gekennzeichnet, daß** der Brechtisch (2) als Luftkissentisch ausgebildet ist.

16. Anlage nach einem der Ansprüche 1 bis 15, **dadurch gekennzeichnet, daß** jeder Fachboden (11) des Speichers (2) als Luftkissenboden ausgebildet ist.

17. Anlage nach Anspruch 16, **dadurch gekennzeichnet, daß** die als Luftkissen ausgebildeten Fachböden (11) über wenigstens einen Kanal (30) mit einer Druckluftquelle verbunden sind.

18. Anlage nach Anspruch 17, **dadurch gekennzeichnet, daß** an jeder Anschlußstelle (31) des Kanals (30) an einem Fachboden (11) ein Absperrorgan vorgesehen ist.

19. Anlage nach Anspruch 16 bis 18, **dadurch gekennzeichnet, daß** der Fachboden (11) in wenigstens zwei Abschnitte, die unabhängig voneinander mit Druckluft beaufschlagbar sind, unterteilt ist.

20. Anlage nach einem der Ansprüche 16 bis 19, **dadurch gekennzeich** net, daß die Fachböden (11) des Zwischenspeichers (2) mit Druckluft beaufschlagbar sind.

21. Anlage nach einem der Ansprüche 1 bis 20, **dadurch gekennzeichnet, daß** die Fachböden (11) einen Rahmen (40) aufweisen, der unten durch eine geschlossene Platte (27) und oben durch eine mit Löchern versehene Platte (26) belegt ist, so daß ein mit Druckluft beaufschlagbarer Raum im Bereich des Fachbodens gebildet wird.

22. Anlage nach Anspruch 21, **dadurch gekennzeichnet, daß** innerhalb des Rahmens (40), insbesondere in dessen Längserstreckung verlaufend wenigstens zwei Längsträger (42,44) vorgesehen sind.

23. Anlage nach Anspruch 22, **dadurch gekennzeichnet, daß** wenigstens einer (42) der beiden Längsträger (42,44) von oben gesehen im nicht belasteten Zustand des Fachbodens (11) konvex gekrümmt ist.

24. Anlage nach einem der Ansprüche 1 bis 23, **dadurch gekennzeichnet, daß** der Zwischenspeicher (3) durch Hubspindeln heb- und senkbar ist.

25. Anlage nach Anspruch 24, **dadurch gekennzeichnet, daß** die Hubspindeln an den Schmalseiten des Zwischenspeichers (3) im Bereich von dessen Ecken angeordnet sind.

## Claims

1. Glass cutting apparatus comprising a cutting table (1) and breaking table (2) with an intermediate storage means (3) for sheets of glass, **characterised in that** the intermediate storage means (3) is arranged next to the breaking table (2).

2. Apparatus according to Claim 1, **characterised in that** the intermediate storage means (3) has at least two essentially horizontal compartments (10).

3. Apparatus according to Claim 1 or 2, **characterised in that** the intermediate storage means (3) can be raised and lowered.

4. Apparatus according to Claim 3, **characterised in that** the intermediate storage means (3) is guided to be displaceable upwards and downwards on at least one pillar (21).

5. Apparatus according to one of Claims 1 to 4, **characterised in that** the intermediate storage means (3) can be tilted out of one position, in which the compartments (10) are oriented to drop down towards the breaking table (2), into a position, in which the compartments (10) are oriented to drop down away from the breaking table (2), and vice versa.

6. Apparatus according to one of Claims 1 to 5, **characterised in that** the intermediate storage means (3) has a frame (15), which is held to swivel on a guide means configured as a slide (20).

7. Apparatus according to Claim 6, **characterised in that** one slide (20) is guided on the perpendicular pillar (21).

8. Apparatus according to Claim 6 or 7, **characterised in that** to tilt the storage means (3) a spreading means (22) acts on the frame (15) thereof.

9. Apparatus according to Claim 8, **characterised in that** the spreading means (22) is supported on the pillar (21).

10. Apparatus according to Claim 8 or 9, **characterised in that** the spreading means is a levering means.

11. Apparatus according to Claim 8 or 9, **characterised in that** the spreading means is a pressure medium cylinder (22).

12. Apparatus according to Claim 8 or 9, **characterised in that** the spreading means is an adjustable cam.

13. Apparatus according to one of Claims 1 to 12, **characterised in that** the breaking table (2) can be tilted out of a position where its surface (9) is horizontal into a position, in which its surface (9) is oriented to drop down towards the storage means (3), and into a position, in which its surface (9) is oriented to drop down away from the storage means (3), and vice versa.

14. Apparatus according to Claim 13, **characterised in that** the table (2) can be tilted with its frame and its surface (9).

15. Apparatus according to one of Claims 1 to 14, **characterised in that** the breaking table (2) is configured as an air cushion table.

16. Apparatus according to one of Claims 1 to 15, **characterised in that** each compartment base (11) of the storage means (3) is configured as an air cushion base.

17. Apparatus according to Claim 16, **characterised in that** the compartment bases (11) configured as air cushion bases are connected to a compressed air source via at least one duct (30).

18. Apparatus according to Claim 17, **characterised in that** a blocking member is provided at each connection point (31) of the duct (30) to a compartment base (11).

19. Apparatus according to Claim 16 to 18, **characterised in that** the compartment base (11) is divided into at least two sections, which can be subjected to compressed air independently of one another.

20. Apparatus according to one of Claims 15 to19, **characterised in that** the compartment bases (11) of the intermediate storage means (3) can be subjected to compressed air.

21. Apparatus according to one of Claims 1 to 20, **characterised in that** the compartment bases (11) have a frame (40), which is covered at the bottom by a solid plate (27) and at the top by a plate (26) provided with holes, so that an area, which can be subjected to compressed air, is formed in the region of the compartment base.

22. Apparatus according to Claim 21, **characterised in that** at least two longitudinal supports (42, 44) are provided inside the frame (40), in particular extending in its longitudinal extension.

23. Apparatus according to Claim 22, **characterised in that** at least one (42) of the two longitudinal supports (42, 44) is convexly curved as viewed from above when the compartment base (11) is in the non-loaded state.

24. Apparatus according to one of Claims 1 to 23, **characterised in that** the intermediate storage means (3) can be raised and lowered by lifting spindles.

25. Apparatus according to Claim 24, **characterised in that** the lifting spindles are arranged on the narrow sides of the intermediate storage means (3) in the region of its corners.

## Revendications

1. Installation de coupe de verre constituée d'une table de coupe (1) et d'une table de rupture (2) avec un dispositif de stockage intermédiaire (3) pour des plaques de verre, **caractérisé en ce que** le dispositif de stockage intermédiaire (3) se trouve placé près de la table de rupture (2).

2. Installation selon la revendication 1, **caractérisée en ce que** le dispositif de stockage intermédiaire (3) présente au moins deux rayons (10) qui sont essentiellement horizontaux.

3. Installation selon la revendication 1 ou 2, **caractérisée en ce que** le dispositif de stockage intermédiaire (3) peut être élevé ou abaissé.

4. Installation selon la revendication 3, **caractérisée en ce que** le dispositif de stockage intermédiaire (3) peut coulisser en montée et en descente le long d'au moins une colonne (21).

5. Installation selon une des revendications 1 à 4, **caractérisée en ce que** le dispositif de stockage intermédiaire (3), partant d'une position dans laquelle les rayons (10) sont dirigés en pente descendante vers la table de rupture (2), peut passer par basculement à une position dans laquelle les rayons (10) sont en pente descendante en partant de la table de rupture (10), et inversement.

6. Installation selon une des revendications 1 à 5, **caractérisée en ce que** le dispositif de stockage intermédiaire (3) possède un cadre (15) qui est monté basculant sur un guide qui présente la forme d'un coulisseau.

7. Installation selon la revendication 6, **caractérisée en ce que** le coulisseau (20) est guidé le long de la colonne verticale (21).

8. Installation selon la revendication 6 ou 7, **caractérisée en ce que** pour faire basculer le dispositif intermédiaire de stockage (12) un dispositif extensible (22) agit sur le cadre (15) de ce dispositif.

9. Installation selon la revendication 8, **caractérisée en ce que** le dispositif extensible (22) s'appuie sur la colonne (21).

10. Installation selon la revendication 8 ou 9, **caractérisée en ce que** le dispositif extensible (22) est un dispositif à levier.

11. Installation selon la revendication 8 ou 9, **caractérisée en ce que** le dispositif extensible est un vérin à fluide sous pression (22).

12. Installation selon la revendication 8 ou 9, **caractérisée en ce que** le dispositif extensible est une came mobile.

13. Installation selon une des revendications 1 à 12, **caractérisée en ce que** la table de rupture (2), partant d'une position où son plateau (9) est horizontal peut passer par basculement dans une position où ce plateau est en pente descendante en direction du dispositif de stockage intermédiaire (3), et dans une position où ce plateau est en pente descendante en partant du dispositif de stockage intermédiaire (3), et inversement:

14. Installation selon la revendication 13, **caractérisée en ce que** la table (2), avec son cadre et son plateau (9), peut basculer.

15. Installation selon une des revendications 1 à 14, **caractérisée en ce que** la table de rupture (2) est une table à coussin d'air.

16. Installation selon une des revendications 1 à 15, **caractérisée en ce que** la surface de chaque rayon (11) du dispositif de stockage intermédiaire (3) est une surface de coussin d'air.

17. Installation selon la revendication 16, **caractérisée en ce que** la surface de rayon (11) constituée par un coussin d'air est reliée à une source d'air comprimé par au moins un canal (30).

18. Installation selon la revendication 17, **caractérisée en ce qu'**il est prévu un organe d'arrêt à chaque point de raccordement (31) du canal (30) à la surface de rayon (11).

19. Installation selon les revendications 16 à 18, **caractérisée en ce que** la surface de rayon (11) est divisée en au moins deux parties qui peuvent être alimentées indépendamment l'une de l'autre par de l'air comprimé.

20. Installation selon une des revendications 16 à 19, **caractérisée en ce que** les surfaces de rayon (11) du dispositif de stockage intermédiaire (3) peuvent être alimentées de l'air comprimé.

21. Installation selon une des revendications 1 à 20, **caractérisée en ce que** chaque surface de rayon (11) présente un cadre (40) qui est garni en bas par un plateau fermé (27) et en haut par un plateau (26) percé de trous, de sorte que dans la zone de la surface de rayon, un espace qui est formé, peut être alimentées de l'air comprimé.

22. Installation selon la revendication 21, **caractérisée en ce qu'**à l'intérieur du cadre (40), et notamment selon la direction longitudinale de celui-ci sont prévus au moins deux longerons porteurs (42, 44).

23. Installation selon la revendication 22, **caractérisée en ce qu'**au moins un (42) des deux longerons (42, 44), vu de haut, présente une courbure convexe quand la surface de rayon (11) n'est pas chargée.

24. Installation selon une des revendications 1 à 23, **caractérisée en ce que** le dispositif de stockage intermédiaire (3) peut être élevé et abaissé au moyen de broches filetées de levage.

25. Installation selon la revendication 24, **caractérisée en ce que** les broches filetées de levage sont disposées sur les côtés étroits du dispositif de stockage intermédiaire (3), près des coins de ce dispositif.
